# EUROPÄISCHE PATENTSCHRIFT

(11) **EP 3 922 893 B1**
(45) Veröffentlichungstag und Bekanntmachung des Hinweises auf die Patenterteilung: **26.04.2023**
(21) Anmeldenummer: 21161603.2
(22) Anmeldetag: 09.03.2021
(51) Int. Cl.: F16L 9/22

(54) **ROHRHALBSCHALE MIT KLICKMECHANISMUS UND DICHTUNG**
TUBE HALF SHELL WITH CLICK MECHANISM AND SEAL
DEMI-COQUILLE DE TUBE POURVU DE CLIQUET ET DE JOINT D'ÉTANCHÉITÉ

(30) Priorität: 10.06.2020 DE 202020002546 U
(43) Veröffentlichungstag der Anmeldung: 15.12.2021
(73) Patentinhaber: Witte Lastrup GmbH, 49688 Lastrup (DE); MSW Kunststoffe GmbH, 26197 Ahlhorn (DE)
(72) Erfinder: Kramer, Ulrich, 27793 Wildeshausen (DE); Holtvoigt, Jan, 49413 Dinklage (DE)
(74) Vertreter: Dilg, Haeusler, Schindelmann Patentanwaltsgesellschaft mbH

(56) Entgegenhaltungen:
- DE-A1- 19 515 403
- DE-U1- 9 207 626
- DE-U1- 29 704 501
- US-A- 4 967 800

## Beschreibung

### TECHNISCHES GEBIET DER VORLIEGENDEN ERFINDUNG

Die vorliegende Erfindung betrifft eine Rohrhalbschale. Zwei solcher komplementären Rohrhalbschalen können zu einem Rohr zusammengesetzt werden.

Die Rohrhalbschalen können dazu vorgesehen sein, Kunststoffrohre, die zum Beispiel in Spiralförderanlagen der Landwirtschaft verwendet werden, bei Undichtigkeiten zum Beispiel durch Verschleiß auf einfache Art abzudichten. Die Teilung der Rohrhalbschalen hat den Vorteil, dass der bisherige Rohr- oder Kabelstrang nicht durchtrennt werden muss, wenn das Rohr bestehend aus zwei Rohrhalbschalen nachträglich montiert werden soll. Ähnlich ist es bei einem Reparaturrohr, wenn eine Futterförderleitung einer Fütterungsanlage verschlissen ist, da es sehr aufwändig ist, diese Leitung zu durchtrennen, um ein neues Futterrohr einzubauen. Besonders wichtig ist dies vor dem Hintergrund, dass Fütterungsanlagen permanent zur Fütterung der Tiere zur Verfügung stehen müssen. Die Futterrohre sollen entweder gerade oder als Bogen ausgebildet sein.

US 4 967 800 A offenbart eine Rohrhalbschale mit den Merkmalen des Oberbegriffs des Anspruchs 1. Eine weitere Rohrhalbschale ist aus DE 195 15 403 A1 bekannt.

### KURZFASSUNG DER ERFINDUNG

Entsprechend besteht ein Bedarf an zuverlässigen Reparaturrohren für gerade oder bogenförmige Rohrleitungen. Dieser Bedarf kann durch den Gegenstand des unabhängigen Anspruchs 1 erfüllt werden. Die vorliegende Erfindung ist entsprechend den abhängigen Ansprüchen weitergebildet.

Gemäß einem ersten Aspekt der Erfindung hat eine Rohrhalbschale in ihrem Querschnitt zueinander komplementäre Rastmechanismen bestehend aus einem ersten Rastmechanismus und einem zweiten Rastmechanismus, wobei der erste Rastmechanismus dazu konfiguriert ist, mit einem zweiten Rastmechanismus einer weiteren, gleichen Rohrhalbschale form- oder kraftschlüssig in Eingriff zu gelangen, und wobei der zweite Rastmechanismus dazu konfiguriert ist, mit einem ersten Rastmechanismus der weiteren, gleichen Rohrhalbschale form- oder kraftschlüssig in Eingriff zu gelangen, so dass beide Rohrhalbschalen miteinander verbunden sind und ein Rohr bilden. Zumindest der zweite Rastmechanismus weist eine Dichtung auf. Der erste Rastmechanismus weist einen ersten Schenkel und einen zweiten Schenkel auf, die dazwischen eine nutenartige Aufnahme für einen Federkörper des zweiten Rastmechanismus' der weiteren, gleichen Rohrhalbschale bilden, wobei der zweite Rastmechanismus einen Federkörper aufweist. An einer Spitze des Federkörpers ist die Dichtung angebracht, die aus einem Material geschaffen ist, das sich von einem Material der übrigen Rohrhalbschale unterscheidet, so dass sich das Material der Spitze von dem Material der übrigen Rohrhalbschale unterscheidet. Die nutenartige Aufnahme des erste Rastmechanismus' und der Federkörper des zweiten Rastmechanismus' der weiteren, gleichen Rohrhalbschale können eine Nut-Feder-Verbindung bilden. Durch beide Rohrhalbschalen kann ein Rohr, insbesondere ein Reparaturrohr bzw. ein Reparaturrohrbogen mit einem robusten und einfachen Klickmechanismus geschaffen werden, der feinsandfest und feuchtigkeitshindernd abdichtend ist.

Die Dichtung ist in dem als Klickverschluss fungierenden Rastmechanismen integriert, die das durch beide Rohrhalbschalen gebildete Rohr, insbesondere ein Reparaturrohr, auch tatsächlich soweit abdichten kann, dass ein Eindringen von Feuchtigkeit oder Feinsand einerseits und ein Austreten von Futter andererseits vermieden werden kann. Das Rohr, insbesondere als Reparaturrohr, kann besonders vorteilhaft bei beliebigen drucklosen Kunststoffrohren verwendet werden, die nicht wasserführend sind.

Bei einem Ausführungsbeispiel ist die Rohrhalbschale durch Extrusion hergestellt, so dass die Herstellung der Rohrhalbschale in großen Längen und beliebigen Krümmungen preiswert ermöglicht wird.

Bei einem Ausführungsbeispiel ist die Dichtung aus einem Material mit Weich-PVC, Gummi, Elastomer oder Polyurethan, geschaffen. Bei einem Ausführungsbeispiel ist die Rohrhalbschale zusammen mit der Dichtung durch Koextrusion (Hitzeverschmelzung im Produktionsprozess) hergestellt. Auch damit wird die Herstellung der Rohrhalbschale mitsamt Dichtung in großen Längen und beliebigen Krümmungen preiswert ermöglicht. Die Dichtung kann durch Koextrusion unverlierbar in der Rohrhalbschale integriert sein (Hitzeverschmelzung im Produktionsprozess).

Bei einem Ausführungsbeispiel weist die Rohrhalbschale in einer Draufsicht senkrecht zum Querschnitt eine nicht-lineare Form, vorzugsweise eine Bogenform mit konstantem Krümmungsradius auf, wobei beliebige Formen möglich sind.

Bei einem Ausführungsbeispiel ist die Dichtung dazu konfiguriert, an einen Boden einer nutenartigen Aufnahme der weiteren, gleichen Rohrhalbschale anzuliegen, wobei die Aufnahme der weiteren, gleichen Rohrhalbschale zwischen einem ersten Schenkel und einem zweiten Schenkel des ersten Rastmechanismus' der weiteren, gleichen Rohrhalbschale gebildet ist. Dadurch wird eine besonders gute Abdichtung des durch beide Rohrhalbschalen gebildeten Rohres gewährleistet. Die nutenartige Aufnahme des ersten Rastmechanismus' der weiteren, gleichen Rohrhalbschale und der Federkörper des zweiten Rastmechanismus' bilden ebenfalls eine Nut-Feder-Verbindung.

Bei einem Ausführungsbeispiel ist der erste Schenkel an einer Rohrhalbschalenaußenseite angeordnet, und der zweite Schenkel ist an einer Rohrhalbschaleninnenseite angeordnet, wobei der erste Schenkel im Querschnitt länger ist als der zweite Schenkel und an seinem Ende einen Rast- oder Schnapphaken aufweist. Bei einem Ausführungsbeispiel weist der zweite Rastmechanismus eine Ausnehmung auf, die für einen formschlüssigen Eingriff mit einem Rast- oder Schnapphaken konfiguriert ist, der an dem ersten Schenkel des ersten Rastmechanismus' der weiteren, gleichen Rohrhalbschale ausgebildet ist. Dadurch können beide Rohrhalbschalen einfach und robust miteinander verbunden werden. Darüber hinaus kann der Rast- oder Schnapphaken ein Andrücken der Dichtung an den Boden der nutenartigen Aufnahme der weiteren, gleichen Rohrhalbschale unterstützen, so dass die Abdichtung verbessert ist.

Bei einem Ausführungsbeispiel weist der zweite Rastmechanismus einen Absatz auf, der eine komplementäre Form zu dem zweiten Schenkel des ersten Rastmechanismus der weiteren, gleichen Rohrhalbschale hat. Dadurch wird einerseits eine Verformung des durch beide Rohrhalbschalen gebildeten Rohres reduziert, während gleichzeitig die Verschnappung des Rast- oder Schnapphakens gesichert werden kann.

Gemäß einem zweiten Aspekt der Erfindung weist ein Rohr die vorstehend beschriebene Rohrhalbschale und die vorstehend beschriebene weitere, gleiche Rohrhalbschale auf.

### KURZBESCHREIBUNG DER ZEICHNUNGEN

Die vorstehend definierten Aspekte und weitere Aspekte der vorliegenden Erfindung ergeben sich aus den nachfolgend beschriebenen Ausführungsbeispielen. Die Erfindung wird für ihre Ausführbarkeit im Folgenden anhand der Ausführungsbeispiele näher beschrieben, auf die die Erfindung jedoch nicht beschränkt ist.
- Fig. 1: zeigt eine Querschnittsansicht einer Rohrhalbschale gemäß einem Ausführungsbeispiel und einer weiteren, gleichen Rohrhalbschale;
- Fig. 2: zeigt eine Draufsicht auf eine Rohrhalbschale gemäß einem Ausführungsbeispiel; und
- Fig. 3: zeigt eine Draufsicht auf eine Rohrhalbschale gemäß einem Ausführungsbeispiel.

### FIGURENBESCHREIBUNG

Die Zeichnungen sind schematisch dargestellt. Es wird darauf hingewiesen, dass in verschiedenen Figuren ähnliche oder identische Elemente mit denselben Bezugszeichen versehen sind.

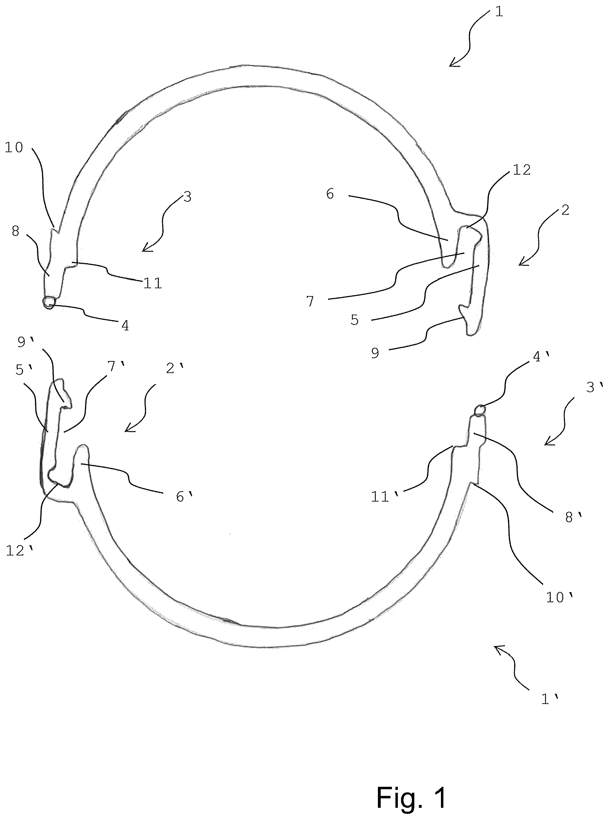

**Fig. 1** zeigt eine Querschnittsansicht einer Rohrhalbschale 1 gemäß einem Ausführungsbeispiel und einer weiteren, gleichen Rohrhalbschale 1'. Die Rohrhalbschale 1 hat in ihrem Querschnitt zueinander komplementäre Rastmechanismen 2, 3, die aus einem ersten Rastmechanismus 2 und einem zweiten Rastmechanismus 3 bestehen. Der erste Rastmechanismus ist 2 dazu konfiguriert, mit einem zweiten Rastmechanismus 3' einer weiteren, gleichen Rohrhalbschale 1' form- oder kraftschlüssig in Eingriff zu gelangen, und der zweite Rastmechanismus 3 ist dazu konfiguriert, mit einem ersten Rastmechanismus 2' der weiteren, gleichen Rohrhalbschale 1' form- oder kraftschlüssig in Eingriff zu gelangen, so dass beide Rohrhalbschalen 1, 1' miteinander verbunden sind und ein Rohr bilden.

Der zweite Rastmechanismus 2 weist eine Dichtung 4 auf. Die Dichtung 4 ist aus einem Material mit Gummi, Elastomer oder Polyurethan geschaffen, während das Material der übrigen Rohrhalbschale 1 ein beliebiges Kunststoffmaterial ist. Die Rohrhalbschale 1 ist vorzugsweise durch Extrusion hergestellt, insbesondere zusammen mit der Dichtung 4 durch Koextrusion.

Der erste Rastmechanismus 2 weist einen ersten Schenkel 5 und einen zweiten Schenkel 6 auf, die dazwischen eine nutenartige Aufnahme 7 für einen Federkörper 8' des zweiten Rastmechanismus' 3' der weiteren, gleichen Rohrhalbschale 1' bilden. Der zweite Rastmechanismus 2 weist einen Federkörper 8 auf, wobei an einer Spitze des Federkörpers 2 die Dichtung 4 angebracht ist. Die nutenartige Aufnahme 7 des erste Rastmechanismus' 2 und der Federkörper 8' des zweiten Rastmechanismus' 3' der weiteren, gleichen Rohrhalbschale 1' können eine Nut-Feder-Verbindung bilden.

Die Dichtung 4 ist dazu konfiguriert, an einen Boden 12' einer nutenartigen Aufnahme 7' der weiteren, gleichen Rohrhalbschale 1' anzuliegen, wobei die Aufnahme 7' der weiteren, gleichen Rohrhalbschale 1' zwischen einem ersten Schenkel 5' und einem zweiten Schenkel 6' des ersten Rastmechanismus' 2' der weiteren, gleichen Rohrhalbschale 1' gebildet ist. Die nutenartige Aufnahme 7' des ersten Rastmechanismus' 2' der weiteren, gleichen Rohrhalbschale 1' und der Federkörper 8 des zweiten Rastmechanismus' 2 bilden ebenfalls eine Nut-Feder-Verbindung.

Der erste Schenkel 5 ist an einer Rohrhalbschalenaußenseite angeordnet und der zweite Schenkel 6 ist an einer Rohrhalbschaleninnenseite angeordnet, wobei der erste Schenkel 5 im Querschnitt länger ist als der zweite Schenkel 6 und an seinem Ende einen Rast- oder Schnapphaken 9 aufweist. Der zweite Rastmechanismus 3 weist eine Ausnehmung 10 auf, die für einen formschlüssigen Eingriff mit einem Rast- oder Schnapphaken 9' konfiguriert ist, der an dem ersten Schenkel 5' des ersten Rastmechanismus' 2' der weiteren, gleichen Rohrhalbschale 1' ausgebildet ist. Der zweite Rastmechanismus 3 weist einen Absatz 11 auf, der eine komplementäre Form zu dem zweiten Schenkel 6' des ersten Rastmechanismus 2' der weiteren, gleichen Rohrhalbschale 1' hat.

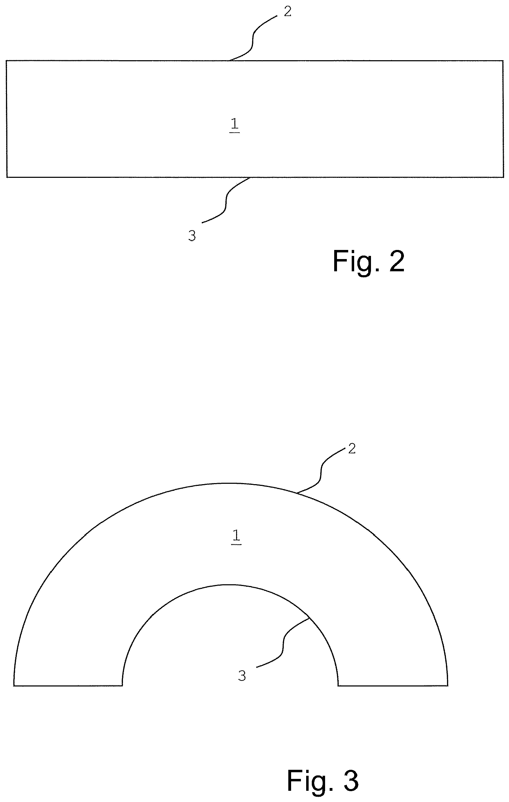

**Fig. 2** zeigt eine Draufsicht auf eine Rohrhalbschale 1 gemäß einem Ausführungsbeispiel, wobei die Rohrhalbschale 1 in einer Draufsicht senkrecht zum Querschnitt eine lineare Form aufweist.

**Fig. 3** zeigt eine Draufsicht auf eine Rohrhalbschale gemäß einem anderen Ausführungsbeispiel, die in einer Draufsicht senkrecht zum Querschnitt eine nicht-lineare Form, vorliegend eine Bogenform mit konstantem Krümmungsradius aufweist.

Es ist zu beachten, dass der Begriff "aufweisen" andere Elemente oder Schritte nicht ausschließt. Auch Elemente, die in Verbindung mit verschiedenen Ausführungsformen beschrieben werden, können kombiniert werden. Es sei auch darauf hingewiesen, dass Bezugszeichen in den Ansprüchen nicht so ausgelegt werden sollten, dass sie den Umfang der Ansprüche widerspiegeln.

### Bezugszeichenliste:

- 1: Rohrhalbschale
- 2: erster Rastmechanismus
- 3: zweiter Rastmechanismus
- 4: Dichtung
- 5: erster Schenkel
- 6: zweiter Schenkel
- 7: Aufnahme
- 8: Federkörper
- 9: Rast- oder Schnapphaken
- 10: Ausnehmung
- 11: Absatz
- 12: Boden

## Patentansprüche

1. Rohrhalbschale (1), die in ihrem Querschnitt zueinander komplementäre Rastmechanismen (2, 3) bestehend aus einem ersten Rastmechanismus (2) und einem zweiten Rastmechanismus (3) aufweist, wobei der erste Rastmechanismus (2) dazu konfiguriert ist, mit einem zweiten Rastmechanismus (3') einer weiteren, gleichen Rohrhalbschale (1') form- oder kraftschlüssig in Eingriff zu gelangen und wobei der zweite Rastmechanismus (3) dazu konfiguriert ist, mit einem ersten Rastmechanismus (2') der weiteren, gleichen Rohrhalbschale (1') form- oder kraftschlüssig in Eingriff zu gelangen, so dass beide Rohrhalbschalen (1, 1') miteinander verbunden sind und ein Rohr bilden, wobei zumindest der zweite Rastmechanismus (3) eine Dichtung (4) aufweist, die aus einem Material geschaffen ist, das sich von einem Material der übrigen Rohrhalbschale (1) unterscheidet;
wobei der erste Rastmechanismus (2) einen ersten Schenkel (5) und einen zweiten Schenkel (6) aufweist, die dazwischen eine nutenartige Aufnahme (7) für einen Federkörper (8') des zweiten Rastmechanismus' (3') der weiteren, gleichen Rohrhalbschale (1') bilden, wobei der zweite Rastmechanismus (3) einen Federkörper (8) aufweist,
**dadurch gekennzeichnet, dass**
die Dichtung (4) nur an einer Spitze des Federkörpers (8) angebracht ist.

2. Rohrhalbschale (1) gemäß dem vorherigen Anspruch, die durch Extrusion, insbesondere aus PVC-U, hergestellt ist.

3. Rohrhalbschale (1) gemäß einem der vorherigen Ansprüche, wobei die Dichtung (4) aus einem Material mit Weich-PVC, Gummi, Elastomer oder Polyurethan, geschaffen ist.

4. Rohrhalbschale (2) gemäß dem vorherigen Anspruch, die zusammen mit der Dichtung (4) durch Koextrusion hergestellt ist.

5. Rohrhalbschale (1) gemäß einem der vorherigen Ansprüche, die in einer Draufsicht senkrecht zum Querschnitt eine nicht-lineare Form, vorzugsweise eine Bogenform mit konstantem Krümmungsradius aufweist.

6. Rohrhalbschale (1) gemäß einem der vorherigen Ansprüche, wobei die Dichtung (4) dazu konfiguriert ist, an einen Boden (12') einer nutenartigen Aufnahme (7') der weiteren, gleichen Rohrhalbschale (1') anzuliegen, wobei die Aufnahme (7') der weiteren, gleichen Rohrhalbschale (1') zwischen einem ersten Schenkel (5') und einem zweiten Schenkel (6') des ersten Rastmechanismus' (2') der weiteren, gleichen Rohrhalbschale (1') gebildet ist.

7. Rohrhalbschale (1) gemäß einem der vorherigen Ansprüche, wobei der erste Schenkel (5) an einer Rohrhalbschalenaußenseite angeordnet ist und der zweite Schenkel (6) an einer Rohrhalbschaleninnenseite angeordnet ist, wobei der erste Schenkel (5) im Querschnitt länger ist als der zweite Schenkel (6) und an seinem Ende einen Rast- oder Schnapphaken (9) aufweist.

8. Rohrhalbschale (1) gemäß einem der vorherigen Ansprüche 6 und 7, wobei der zweite Rastmechanismus (3) eine Ausnehmung (10) aufweist, die für einen formschlüssigen Eingriff mit einem Rast- oder Schnapphaken (9') konfiguriert ist, der an dem ersten Schenkel (5') des ersten Rastmechanismus' (2') der weiteren, gleichen Rohrhalbschale (1') ausgebildet ist.

9. Rohrhalbschale (1) gemäß einem der vorherigen Ansprüche 6 bis 8, wobei der zweite Rastmechanismus (3) einen Absatz (11) aufweist, der eine komplementäre Form zu dem zweiten Schenkel (6') des ersten Rastmechanismus (2') der weiteren, gleichen Rohrhalbschale (1') hat.

10. Rohr mit der Rohrhalbschale (1) gemäß einem der vorherigen Ansprüche und der weiteren, gleichen Rohrhalbschale (1').

## Claims

1. A tubular half-shell (1) having cross-sectionally complementary latching mechanisms (2, 3) consisting of a first latching mechanism (2) and a second latching mechanism (3), wherein the first latching mechanism (2) is configured to engage positively or non-positively with a second latching mechanism (3') of a further, similar tubular half-shell (1') and wherein the second latching mechanism (3) is configured to engage positively or non-positively with a first latching mechanism (2') of the further, similar pipe half-shell (1'), so that both pipe half-shells (1, 1') are connected to one another and form a pipe, at least the second latching mechanism (3) having a sealing (4) which is made from a material which differs from a material of the remaining pipe half-shell (1),
wherein the first latching mechanism (2) having a first leg (5) and a second leg (6) forming therebetween a groove-like receptacle (7) for a spring body (8') of the second latching mechanism (3') of the further, similar pipe half-shell (1'), the second latching mechanism (3) having a spring body (8),
**characterized in that**
the sealing (4) is attached to only a tip of the spring body (8).

2. The pipe half-shell (1) according to the previous claim, manufactured by extrusion, in particular from PVC-U.

3. The pipe half-shell (1) according to any one of the previous claims, wherein the sealing (4) is made from a material comprising soft PVC, rubber, elastomer or polyurethane.

4. The pipe half-shell (2) according to the previous claim, manufactured together with the sealing (4) by coextrusion.

5. The pipe half-shell (1) according to any one of the preceding claims, which in a plan view perpendicular to the cross-section has a non-linear shape, preferably an arc shape with a constant radius of curvature.

6. The pipe half-shell (1) according to any one of the preceding claims, wherein the sealing (4) is configured to abut against a bottom (12') of a groove-like receptacle (7') of the further, similar pipe half-shell (1'), wherein the receptacle (7') of the further, similar pipe half-shell (1') is formed between a first leg (5') and a second leg (6') of the first latching mechanism' (2') of the further, similar pipe half-shell (1').

7. The pipe half-shell (1) according to any one of the previous claims, wherein the first leg (5) is arranged on a pipe half-shell outer side and the second leg (6) is arranged on a pipe half-shell inner side, wherein the first leg (5) is longer in cross-section than the second leg (6) and has a latching or snap-in hook (9) at its end.

8. The pipe half-shell (1) according to any one of the preceding claims 6 and 7, wherein the second latching mechanism (3) comprises a recess (10) configured for positive engagement with a latching or snap hook (9') formed on the first leg (5') of the first latching mechanism' (2') of the further, similar pipe half-shell (1').

9. The pipe half-shell (1) according to any one of the preceding claims 6 to 8, wherein the second latching mechanism (3) comprises a shoulder (11) having a complementary shape to the second leg (6') of the first latching mechanism (2') of the further, similar pipe half-shell (1').

10. A pipe comprising the pipe half-shell (1) according to any one of the preceding claims and the further, similar pipe half-shell (1').

## Revendications

1. Demi-coquille de tube (1) qui présente des mécanismes à enclenchement (2, 3) complémentaires l'un à l'autre quant à leur section transversale, constitués d'un premier mécanisme à enclenchement (2) et d'un deuxième mécanisme à enclenchement (3), le premier mécanisme à enclenchement (2) étant configuré de façon à venir en prise par complémentarité de forme ou par force avec un deuxième mécanisme à enclenchement (3') d'une autre demi-coquille de tube (1') identique, et le deuxième mécanisme à enclenchement (3) étant configuré de façon à venir en prise par complémentarité de forme ou par force avec un premier mécanisme à enclenchement (2') de l'autre demi-coquille de tube (1') identique, de sorte que les deux demi-coquilles de tube (1, 1') sont reliées l'une à l'autre et forment un tube, au moins le deuxième mécanisme à enclenchement (3) comprend un joint d'étanchéité (4) qui est réalisé dans un matériau qui est différent d'un matériau de la demi-coquille de tube restante (1) ;
le premier mécanisme à enclenchement (2) comprenant une première branche (5) et une deuxième branche (6) qui forment entre elles un logement (7) en forme de rainure pour un corps élastique (8') du deuxième mécanisme à enclenchement (3') de l'autre demi-coquille de tube (1') identique, le deuxième mécanisme à enclenchement (3) comprenant un corps élastique (8),
**caractérisé en ce que**
le joint d'étanchéité (4) est fixé seulement à une pointe du corps élastique (8).

2. Demi-coquille de tube (1) selon la revendication précédente, fabriquée par extrusion, notamment en PVC-U.

3. Demi-coquille de tube (1) selon l'une des revendications précédentes, dans laquelle le joint d'étanchéité (4) est réalisé en un matériau comprenant du PVC souple, du caoutchouc, de l'élastomère ou du polyuréthane.

4. Demi-coquille de tube (2) selon la revendication précédente, fabriquée par coextrusion avec le joint d'étanchéité (4).

5. Demi-coquille de tube (1) selon l'une des revendications précédentes, qui présente, selon une vue en plan perpendiculaire à la section transversale, une forme non linéaire, de préférence une forme d'arc à rayon de courbure constant.

6. Demi-coquille de tube (1) selon l'une des revendications précédentes, dans laquelle le joint d'étanchéité (4) est configuré de façon à venir en appui contre un fond (12') d'un logement (7') en forme de rainure de l'autre demi-coquille de tube (1') identique, le logement (7') de l'autre demi-coquille de tube (1') identique étant formé entre une première branche (5') et une deuxième branche (6') du premier mécanisme à enclenchement (2') de l'autre demi-coquille de tube (1') identique.

7. Demi-coquille de tube (1) selon l'une des revendications précédentes, dans laquelle la première branche (5) est agencée sur un côté extérieur de la demi-coquille de tube et la deuxième branche (6) est agencée sur un côté intérieur de la demi-coquille de tube, la première branche (5) étant plus longue en section transversale que la deuxième branche (6) et présentant à son extrémité un crochet (9) à enclenchement ou à encliquetage.

8. Demi-coquille de tube (1) selon l'une quelconque des revendications 6 et 7 précédentes, dans laquelle le deuxième mécanisme à enclenchement (3) comprend un évidement (10) configuré pour un engagement positif avec un crochet (9') à enclenchement ou à encliquetage formé sur la première branche (5') du premier mécanisme à enclenchement (2') de l'autre demi-coquille de tube (1') identique.

9. Demi-coquille de tube (1) selon l'une quelconque des revendications précédentes 6 à 8, dans laquelle le deuxième mécanisme à enclenchement (3) comprend un épaulement (11) ayant une forme complémentaire à la deuxième branche (6') du premier mécanisme à enclenchement (2') de l'autre demi-coquille de tube identique (1').

10. Tube comprenant la demi-coquille de tube (1) selon l'une des revendications précédentes et l'autre demi-coquille de tube (1') identique.
